# EUROPÄISCHE PATENTSCHRIFT

(11) **EP 4 217 609 B1**
(45) Veröffentlichungstag und Bekanntmachung des Hinweises auf die Patenterteilung: **14.08.2024**
(21) Anmeldenummer: 21783446.4
(22) Anmeldetag: 23.09.2021
(51) Int. Cl.: F04B 39/12, F16L 55/04

(54) **VORRICHTUNG ZUM ENTKOPPELN SOWIE ZUR SCHWINGUNGSKONTROLLE**
DEVICE FOR DECOUPLING AND FOR VIBRATION CONTROL
DISPOSITIF POUR DÉCOUPLER ET CONTRÔLER LES VIBRATIONS

(30) Priorität: 23.09.2020 CH 12042020
(43) Veröffentlichungstag der Anmeldung: 02.08.2023
(60) Teilanmeldung: 24187458.5
(73) Patentinhaber: Aborra AG, 8152 Opfikon (CH)
(72) Erfinder: CIVELEK, Resat, 8803 Rüschlikon (CH); AMOR, Adel, 6020 Emmenbrücke (CH)
(74) Vertreter: Keller Schneider Patent- und Markenanwälte AG
(86) Internationale Anmeldenummer: PCT/EP2021/076271
(87) Internationale Veröffentlichungsnummer: WO 2022/063932

(56) Entgegenhaltungen:
- EP-A1- 3 070 387
- WO-A1-2019/191194
- WO-A1-99/22171
- JP-A- H11 291 361

## Beschreibung

### Technisches Gebiet

Die vorliegende Erfindung beschreibt eine Vorrichtung in Form eines Verbindungsrohres zur Verwendung in Wärmepumpeneinrichtungen, umfassend ein Rohrabschnitt sowie jeweils ein endseitig angeordnetes Anschlusselement, zum Entkoppeln sowie zur Schwingungskontrolle, insbesondere zur Schwingungsentkopplung, bei einem Schwingungserzeuger wie beispielsweise einem Verdichter (Kompressor) oder einer Pumpe. Insbesondere dient die erfindungsgemässe Vorrichtung zum Ausgleich von Bewegungen und Montageungenauigkeiten im Zusammenhang mit solchen Systemen beziehungsweise Schwingungserzeugern.

### Stand der Technik

Bekannt sind aus dem Stand der Technik diverse Wärmepumpeneinrichtungen, wobei diese üblicherweise zumindest einen Verdichter, einen Kondensator (d.h. Verflüssiger), eine Expansionseinrichtung (insbesondere ein Expansionsventil) sowie einen Verdampfer umfassen.

Die Wärmepumpe ist technisch wie ein Kühlschrank aufgebaut mit dem Unterschied, dass bei der Wärmepumpe die warme Seite (d.h. der Verflüssiger der Wärmepumpe) zum Heizen genutzt wird. Mit anderen Worten basieren sowohl die Wärmepumpeneinrichtung wie auch der Kühlschrank auf einem HLKK-Verdichtersystem (d.h. Heizungs-, Lüftungs-, Klima- bzw. Kältetechnik).

Eine Grundproblematik bei bekannten Wärmepumpeneinrichtungen liegt in der Lärmentwicklung. Der Verdichter beziehungsweise Kompressor erzeugt während des Betriebs Schwingungen, die sowohl Schwingungen des Verdichters selbst, die durch mechanische Verbindungen auf andere Teile des Systems übertragen werden können, als auch Schwingungen in dem verdichteten Arbeitsfluid, das aus dem Auslass des Verdichters austritt, umfassen können.

Entlang des Kältemittelkreislaufs können eine oder mehrere Vorrichtungen zur Schwingungskontrolle angeordnet sein, um eine oder beide dieser Schwingungsquellen zu kontrollieren.

Hierbei sind grundsätzlich Vorrichtungen zur Schwingungskontrolle bekannt, um solche Schwingungsquellen zu kontrollieren, beispielsweise durch Anordnen der Vorrichtung zur Schwingungskontrolle zwischen dem Verdichter und dem Kondensator (d.h. Verflüssiger).

Eine Schallisolierung des Verdichters der Wärmepumpeneinrichtung ist hierbei von besonderer Bedeutung, so dass die Aufstellung der Kompaktwärmepumpe ohne Komforteinbusse innerhalb des zu beheizenden Wohnraums ermöglicht ist.

Im Weiteren ist aus dem Dokument DE 10 2008 016 577 A1 eine Wärmepumpeneinrichtung bekannt umfassend eine Kompaktwärmepumpe in der Grösse eines Elektrospeicherheizgerätes, wobei die Kompaktwärmepumpe ein Gehäuse aufweist, in dem zumindest ein Verdichter und ein Kondensator (d.h. Verflüssiger) angeordnet sind.

Das Gehäuse der hier offenbarten Wärmepumpeneinrichtung weist einen schallisolierten Teilbereich auf, in dem ein Verdichter angeordnet ist, wodurch eine Vorrichtung zur Pulsations- und Schwingungskontrolle erzielt wird.

Insbesondere sind hier die Wände dieses schallisolierten Teilbereichs mit einem geeigneten schallisolierenden Material, beispielsweise mehrere cm dicke Schallschutzmatten, verkleidet. Die Befestigungselemente für die Boden- und Wandbefestigung oder die Füsse für die freie Montage sind hierbei ebenfalls mit schallisolierenden Elementen, beispielsweise Gummischeiben, versehen, um eine Übertragung von Vibrationen möglichst zu vermeiden. Die Wände bewirken hier eine schallisolierende Abtrennung zwischen Verdichter und Kondensator (Verflüssiger).

Die aus dem Dokument DE 10 2008 016 577 A1 bekannte Vorrichtung zur Pulsations- und Schwingungskontrolle hat den Nachteil, dass mit sehr aufwendigen Mitteln hier eine Pulsations- und Schwingungskontrolle erzielt wird.

Das weitere Dokument DE 20 2018 102 825 U1 offenbart eine weitere Vorrichtung zur Pulsations- und Schwingungskontrolle für einen Verdichter in einem HLKK-Verdichtersystem (d.h. Heizungs-, Lüftungs-, Klima- bzw. Kältetechnik) beziehungsweise in einer Wärmepumpenanordnung. Insbesondere wird auch hier die Vorrichtung zur Pulsations- und Schwingungskontrolle zwischen einem Verdichter und einer Ableitung, z.B. zum Kondensator (Verflüssiger) hin, angeordnet.

Die aus dem Dokument DE 20 2018 102 825 U1 bekannte Vorrichtung zur Pulsations- und Schwingungskontrolle umfasst eine Schalldämpfereinheit mit einem Flansch an einem Verdichterende, einen Schalldämpferkörper, eine oder mehrere Schwingungsdämpfungsstrukturen, wie etwa Umlenkungen im Inneren des Schalldämpferkörpers und einem dem Verdichterende gegenüberliegenden freien Ende des Schalldämpfers, eine Faltenbalganordnung, die an dem Flansch befestigt ist und sich über die Länge des Schalldämpferkörpers zu einer Ableitung erstreckt, und wobei das freie Ende des Schalldämpfers und die Ableitung einander nicht berühren.

Die Faltungen der Faltenbalganordnung werden in Dokument DE 20 2018 102 825 U1 als aus mehreren Schichten bestehendes Metall wie Kupfer oder Stahl beschrieben.

Mit anderen Worten handelt es sich hier um eine Konstruktion, die Schalldämpfer und Faltenbalg integriert, um eine Geräuschsreduzierung, d.h. eine Schall- und Schwingungsreduzierung, innerhalb eines HLKK-Verdichtersystems (d.h. Heizungs-, Lüftungs-, Klima- bzw. Kältetechnik) beziehungsweise einer Wärmepumpenanordnung zu erreichen.

Die aus dem Dokument DE 20 2018 102 825 U1 bekannte Vorrichtung zur Pulsations- und Schwingungskontrolle hat den Nachteil, dass die Vorrichtung einen vergleichsweise komplizierten Aufbau mit Strukturstützen, Schalldämpferflanschen, Verschweissungen etc. aufweist.

Als weiterer Stand der Technik ist ein «flexible flanged rubber expansion joint» der Firma Nortech bekannt, welcher als eine Vorrichtung zur Schwingungskontrolle fungiert und zwischen zwei Anschlussflanschen einen elastischen Rohrabschnitt aufweist. Hierbei weist der elastische Rohrabschnitt mittig eine kugelförmige Ausbuchtung auf.

Diese Vorrichtung zur Schwingungskontrolle der Firma Nortech hat den Nachteil, dass die Handhabung bei der Montage erschwert ist.

Im Weiteren sind aus dem Stand der Technik isolierte Wärmepumpen-Verbindungsschläuche bekannt, welche die einzelnen Komponenten, insbesondere den Verdichter, den Kondensator (d.h. Verflüssiger), die Expansionseinrichtung (insbesondere ein Expansionsventil) sowie den Verdampfer, fluidisch miteinander verbindet.

In der EP 3070387 A1 ist zudem eine flexible Kupplung beschrieben, die in der Flugzeugindustrie im Bereich der Lüftungstechnik eingesetzt wird. Diese weist in zwei geraden Bereichen, zwischen denen eine Krümmung angeordnet ist, eine dünne Materialstärke auf sowie mittig darin zwei zackenförmige Faltungen, um die Flexibilität bei der Montage zu erhöhen.

### Darstellung der Erfindung

Die vorliegende Erfindung hat sich zur Aufgabe gestellt, eine eingangs beschriebene Vorrichtung zur Pulsations- und Schwingungskontrolle gegenüber einem Schwingungserzeuger für eine Wärmepumpeneinrichtung zu schaffen, wobei sich die Vorrichtung durch eine einfache Bauweise sowie eine vereinfachte Handhabung bei gleichzeitig effektiver Pulsations- und Schwingungskontrolle auszeichnet. Ziel ist es, die Lärmübertragung vom Schwingungserzeuger möglichst gering zu halten.

Diese Aufgaben erfüllt eine Vorrichtung mit den Merkmalen des Patentanspruches 1.

Erfindungsgemäss umfasst die eingangs beschriebene Vorrichtung zur Schwingungskompensation genau zwei nicht-metallische, beabstandete, versetzt angeordnete Faltenbalganordnungen zur Schwingungskompensation , wobei der Rohrabschnitt zwischen den Anschlusselementen, abgesehen von allfälligen einzelnen Stabilisierungsringen oder Verstärkungsrippen, eine gleichbleibende Materialstärke aufweist und wobei die Faltenbalganordnungen aus einem oder mehreren ringförmig geschlossenen, jeweils 360° um laufenden Faltungen bestehen. Die Faltungen der Faltenbalganordnungen sind derart ausgestaltet, dass in einem Längsschnitt die Mittellinie innerhalb des Materials etwa Kugelsegmente mit selben Radien nachbildet. Spiralförmig ausgebildete Faltungen können im Gegensatz zu ringförmig geschlossenen Faltungen erheblich weniger Energie aufnehmen, weil wertvoller Platz für Anfang und Ende der Faltung beansprucht wird, der eher versteifend als elastisch wirkt. Ebenso sind Faltungen, die weniger als 360° umlaufend ausgestaltet sind, nur partiell elastisch und daher ungeeignet für die vorliegende Erfindung.

Die Falten sollten insbesondere möglichst nahe an den Anschlusselementen sein, damit der Rohrabschnitt zwischen den beiden Faltenbalganordnungen möglichst lang ist. Der Abstand vom Ende der Vorrichtung bis zur Faltenbalganordnung sollte kleiner sein als zwei Faltungen. In diesen Abstand fällt auch der Bereich, in dem die Anschlusselemente angeordnet sind. Wenn die Anschlusselemente wenig Platz beanspruchen, kann dieser Abstand auch kürzer als 1.5 oder kürzer als eine Faltung ausgestaltet sein. Die direkte Nähe der Faltungen 16 zu den Anschlusselementen haben insbesondere auch den Vorteil, wenig Platz zu beanspruchen, da die Einbauverhältnisse bei Wärmepumpen sehr eng sind.

Zudem sollten die Faltungen in ihren Erhebungen möglichst kurz sein. Dies bedeutet, dass sie in ihrer Mittellinie, im Längsschnitt, einer etwa sinusförmigen Linie folgen oder dass die Mittellinie innerhalb des Materials etwa Kugelsegmente mit selben Radien nachbilden. Die Radien sollten in der Grössenordnung der Materialstärke sein, bevorzugt mit einer Abweichung von maximal einem Faktor von 1.5. Dadurch ist gewährleistet, dass die Wand des Rohres in den Faltenbalganordnungen viel Schwingungsenergie aufnehmen und absorbieren kann, da die gesamten Faltenbalgbereiche weich ausgestaltet sind und diese selbst keine Resonanzen bilden können.

Je dicker und weicher das Material ist, desto höher ist dadurch die Dissipation, also die Aufnahme von Schwingungsenergie und Umwandlung in Wärmeenergie. Steife, gelenkartig angebrachte Segmente innerhalb der Faltenbalgbereiche, wie sie in der EP 3070378 A1 beschrieben sind, tragen nicht nur nicht zur Dissipation bei, sie können gar ursächlich für Resonanzbildung sein.

Bevorzugt ist der Rohrabschnitt einstückig hergestellt. Da die Druckbeanspruchung in der Anwendung einer Wärmepumpe sehr hoch ist, dann der Rohrabschnitt mit einer Karkasse verstärkt sein. Vorzugsweise besteht der Rohrabschnitt volumenmässig grösstenteils aus einem Elastomer.

Mit anderen Worten weist die erfindungsgemässe Vorrichtung einen Gummikompensator in Form einer nicht-metallischen Faltenbalganordnung auf.

Im Sinne der vorliegenden Erfindung wird unter einer Faltenbalganordnung ein sich ziehharmonikaartig zusammenfaltender Schlauch verstanden.

Die erfindungsgemässe Vorrichtung zum Entkoppeln sowie zur Schwingungskontrolle hat den Vorteil, dass aufgrund der einfachen Bauweise im Wesentlichen als gebogenes Rohr ausgestaltet mit zwei endseitigen Anschlussflanschen eine besonders einfache Montage beziehungsweise Demontage möglich ist, d.h. dass die Vorrichtung leicht von den weiteren Komponenten des HLKK-Verdichtersystems (d.h. Heizungs-, Lüftungs-, Klima- bzw. Kältetechnik) beziehungsweise der Wärmepumpenanordnung entkoppelbar ist.

Insbesondere durch die Wahl einer Faltenbalganordnung mit Faltungen aus einem nicht-metallischen Material konnte vorteilhaft gefunden werden, dass die Bauweise gegenüber der aus dem Dokument DE 20 2018 102 825 U1 mit Faltungen aus einem metallischen Material bedeutend vereinfacht werden kann.

Im Vergleich zu Dokument DE 10 2008 016 577 A1 wird erfindungsgemäss eine Vorrichtung realisiert, welche eine Schallisolierung und eine fluidische Verbindung in einfacher Weise miteinander vereint.

Im Vergleich zur «flexible flanged rubber expansion joint» der Firma Nortech mit einer mittig angeordneten, kugelförmigen Ausbuchtung mit nur minimaler angularer Auslenkungsmöglichkeit erlaubt die erfindungsgemässe Vorrichtung vorteilhaft bedeutend grössere, angulare Auslenkungen und durch die erfindungsgemässe Vorrichtung werden die notwendigen lateralen Bewegungen zur Schwingungsentkopplung ermöglicht.

Grundsätzlich ist es denkbar, dass die erfindungsgemässe Vorrichtung alternativ in den Anwendungsbereichen Energietechnik, industrielle Wasseraufbereitung oder Anlagenbau eingesetzt wird, in welchen nebst Kompressoren weitere Schwingungserzeuger wie beispielsweise Pumpen, insbesondere Wasserpumpen (beispielsweise eine Pumpe im Zuführbereich von Umkehrosmoseanlagen), verwendet werden.

Weitere vorteilhafte Ausgestaltungsformen sind in den abhängigen Patentansprüchen angegeben.

Vorzugsweise wird die erfindungsgemässe Vorrichtung zum Entkoppeln sowie zur Schwingungskontrolle zwischen dem Verdichter und dem Kondensator (d.h. Verflüssiger) angeordnet.

Bevorzugt ist der Rohrabschnitt gebogen, wobei zwei Schenkel aufgespannt werden mit einem dazwischen aufgespannten Winkel zwischen 75° bis 120°, noch bevorzugter einen Winkel von etwa 90°, und dadurch zwei winklig zueinander stehende Schenkel ausgebildet sind, an welchen die Faltenbalganordnung angeordnet ist.

Bevorzugt ist die Faltenbalganordnung der erfindungsgemässen Vorrichtung jeweils direkt anliegend an ein Anschlusselement angeordnet. Eine derartige Faltenbalganordnung hat den Vorteil, dass ein möglichst grosser Hebelarm zwischen den Balgregionen ausgebildet wird und damit die Handhabung wesentlich vereinfacht ist. Mit anderen Worten ermöglicht der grosse Hebelarm zwischen den Faltenbälgen eine besonders grosszügige Montagefreiheit und eine besonders vorteilhafte Schwingungsentkopplung.

Vorzugsweise ist ein Rohrabschnitt der erfindungsgemässen Vorrichtung zum Entkoppeln sowie zur Schwingungskontrolle einstückig ausgebildet ist und dadurch ist die Faltenbalganordung einstückig in den Rohrabschnitt der Vorrichtung integriert. Diese Einstückigkeit beziehungsweise das einteilige Design hat den besonderen Vorteil, dass ein Leckagerisiko praktisch ausgeschlossen ist und dass das Risiko möglicher Montagefehler in besonderem Masse reduziert wird.

Ein weiterer Aspekt der vorliegenden Erfindung betrifft eine Verwendung der erfindungsgemässen Vorrichtung 2 als fluidische Verbindung sowie zur Entkopplung und Schwingungskontrolle gegenüber einem Schwingungserzeuger, beispielsweise gegenüber einer Pumpe oder gegenüber einem Verdichter in einer Wärmepumpeneinrichtung.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine erste bevorzugte Ausführungsform der erfindungsgemässen Vorrichtung zum Entkoppeln sowie zur Schwingungskontrolle mit einem Anschlusselement in Form eines Anschlussflansches;
- Fig. 2: eine zweite bevorzugte Ausführungsform der erfindungsgemässen Vorrichtung zum Entkoppeln sowie zur Schwingungskontrolle mit einem Anschlusselement in Form einer Verschraubung;
- Fig. 3A: einen Längsschnitt durch die erste bevorzugte Ausführungsform mit einem Anschlusselement in Form eines Anschlussflansches sowie mit einer Vielzahl von Stabilisierungsringen;
- Fig. 3B: eine Detailansicht eines Bereichs B der ersten bevorzugten Ausführungsform der erfindungsgemässen Vorrichtung des als Anschlussflansch ausgestalteten Anschlusselements;
- Fig. 3C: eine Frontansicht der ersten bevorzugten Ausführungsform der erfindungsgemässen Vorrichtung mit einem Anschlusselement in Form eines Anschlussflansches;
- Fig. 4A: einen Längsschnitt durch die erste bevorzugte Ausführungsform der erfindungsgemässen Vorrichtung zum Entkoppeln sowie zur Schwingungskontrolle mit einem Anschlusselement in Form eines Anschlussflansches;
- Fig. 4B: eine Detailansicht des Anschlusselements in Form einer Verschraubung der zweiten bevorzugten Ausführungsform der erfindungsgemässen Vorrichtung zum Entkoppeln sowie zur Schwingungskontrolle;
- Fig. 4C: eine Detailansicht des Anschlusselements in Form eines Presssystems einer dritten bevorzugten Ausführungsform der erfindungsgemässen Vorrichtung;
- Fig. 5A: eine vierte bevorzugte Ausführungsform der erfindungsgemässen Vorrichtung zum Entkoppeln sowie zur Schwingungskontrolle mit einem Anschlusselement in Form einer Nutverbindung;
- Fig. 5B: einen Schnitt C-C durch die vierte bevorzugte Ausführungsform der erfindungsgemässe Vorrichtung mit einem Anschlusselement in Form einer Nutverbindung.
- Fig. 6A: eine fünfte bevorzugte Ausführungsform der erfindungsgemässen Vorrichtung zum Entkoppeln sowie zur Schwingungskontrolle mit einem Anschlusselement in Form einer weiteren Verschraubung beziehungsweise Schraubverbindung;
- Fig. 6B: einen Schnitt D-D durch die weitere Verschraubung der fünften bevorzugten Ausführungsform der erfindungsgemässen Vorrichtung;
- Fig. 7: ein HLKK-Verdichtersystem.

### Beschreibung

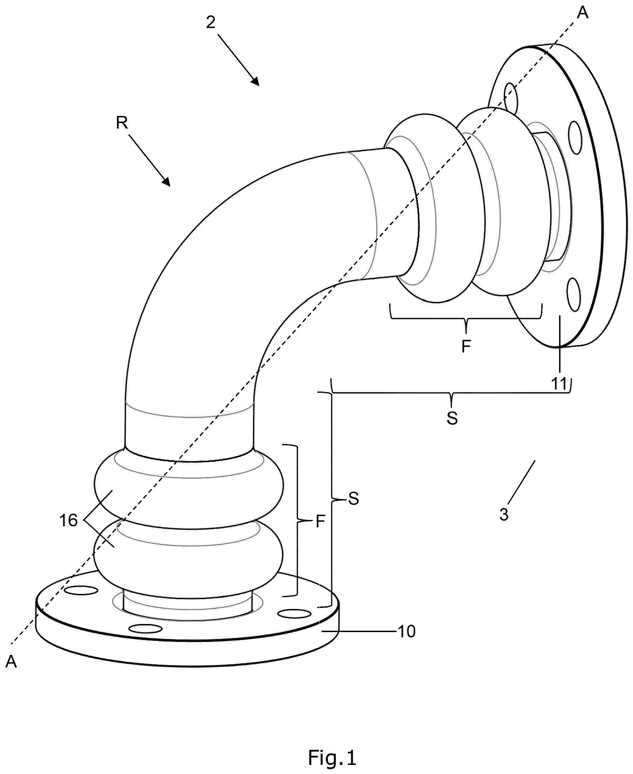

**Fig.1** zeigt eine erste bevorzugte Ausführungsform der erfindungsgemässen Vorrichtung 2 zum Entkoppeln sowie zur Schwingungskontrolle mit einem jeweils endseitig angebrachten ersten und zweiten Anschlussflansch 10; 11 als Anschlusselement.

Diese erste bevorzugte Ausführungsform erfindungsgemässen Vorrichtung 2 zum Entkoppeln sowie zur Schwingungskontrolle umfasst hier einen Rohrabschnitt R, welcher gebogen ist dadurch zwei Schenkel S aufspannt.

Die Vorrichtung 2 umfasst hier mindestens zwei beabstandete, versetzt angeordnete Faltenbalganordnungen F zur Schwingungskompensation.

Die Vorrichtung 2 umfasst in einem Bereich zu den endseitigen Anschlusselementen hier jeweils eine nicht-metallische Faltenbalganordnung F. Eine Faltenbalganordnung F weist hier beispielhaft jeweils zwei Faltungen 16 auf, wobei jeweils auch eine Faltung 16 oder drei Faltungen 16 möglich sind. Besonders bevorzugt sind die beiden Faltungen 16 der Faltenbalganordnung F aus einem Gummimaterial resp. Elastomer gefertigt, insbesondere aus Ethylen-Propylen-Dien Kautschuk (EPDM), Nitrilkautschuk (NBR), Butylkautschuk, Silikon oder eine beliebige Kombination hiervon. Ganz besonders bevorzugt kann die Innenfläche des Rohrabschnitts R der Vorrichtung 2 mit einer wasserabweisenden Beschichtung, beispielsweise mit einer Teflonbeschichtung, versehen sein.

Von hier an und im Folgenden bezeichnen gleiche Referenzzeichen gleiche Komponenten in den Figuren.

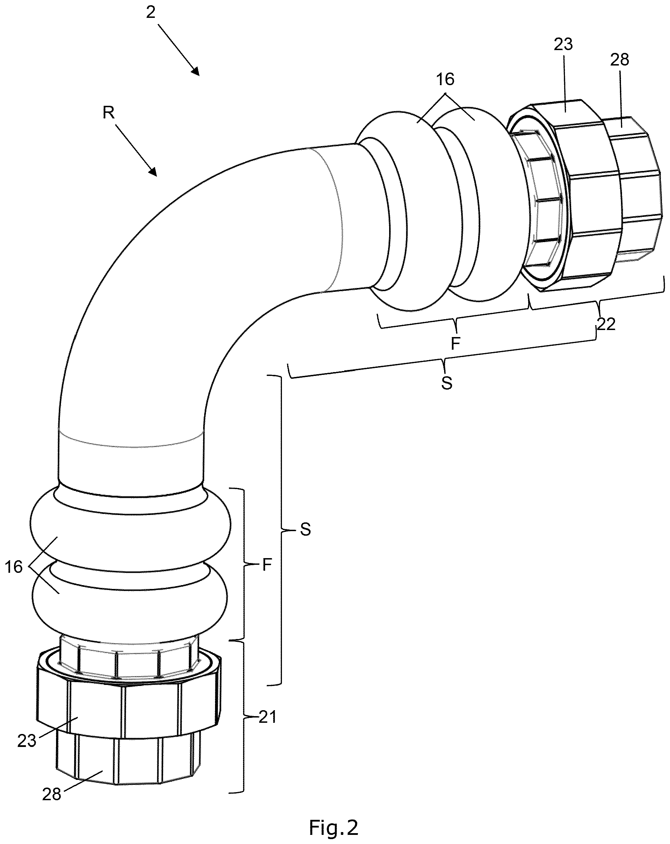

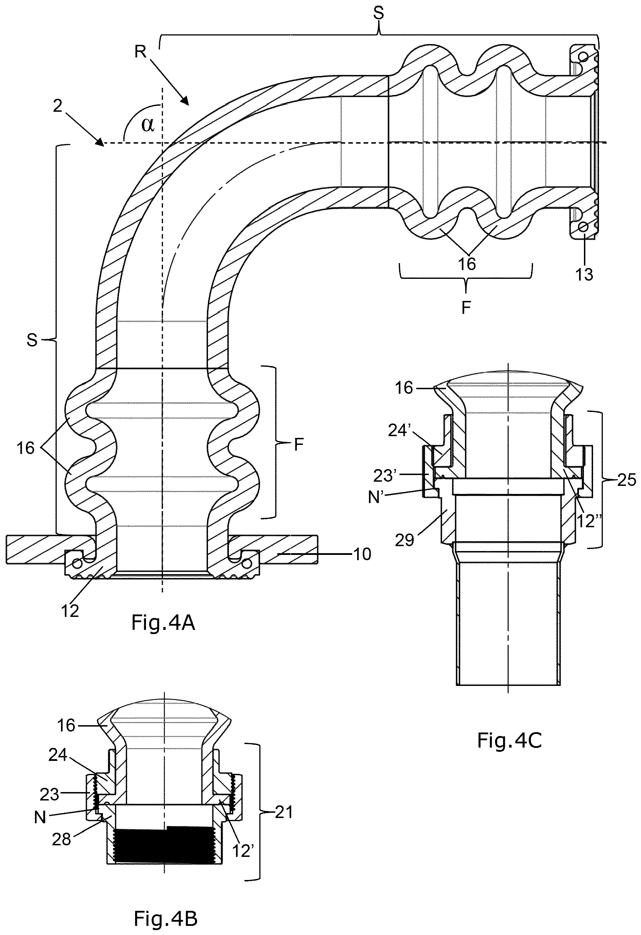

**Fig.2** zeigt eine zweite bevorzugte Ausführungsform der erfindungsgemässen Vorrichtung 2 zum Entkoppeln sowie zur Schwingungskontrolle mit einem Anschlusselement in Form einer hier jeweils dreiteilig ausgestalteten Verschraubungen 21; 22, wie dies im Detail in Fig.4B nochmals erläutert wird. Die Verschraubungen 21; 22 der Überwurfmuttern 23 sowie die Verbindungsmutter 28; 28' sind hier als Mehrkantmutter ausgestaltet.

Die Verschraubung beziehungsweise Schraubverbindung 21; 22 kann aus Metall gefertigt sein. Gemäss einer bevorzugten Weiterbildung der vorliegenden Erfindung ist es auch denkbar, dass die Verschraubung aus einem nicht-metallischen Material, d.h. insbesondere aus einem Kunststoff wie (PE) oder PVC, gefertigt ist, wobei Kunststoff vorteilhaft ist für Anwendungen im Lebensmittel- und Chemiebereich.

Vorzugsweise kann die Vorrichtung 2, d.h. insbesondere der Rohrabschnitt R, aus einer vulkanisierten Einheit Elastomer wie Ethylen-Propylen-Dien Kautschuk (EPDM), Butylkautschuk, Nitrilkautschuk (NBR), Silikon gefertigt sein. Die Wahl eines solchen Elastomers hat den Vorteil, diffusionsarm zu sein beziehungsweise eine geringe Gasdurchgängigkeit aufzuweisen.

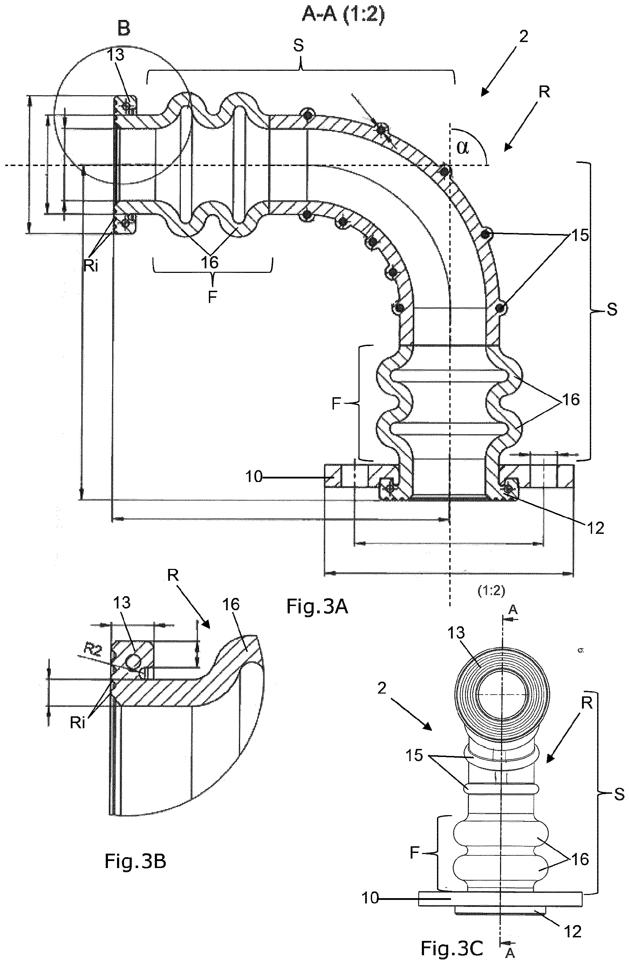

**Fig.3A** zeigt einen Längsschnitt durch die erste bevorzugte Ausführungsform mit einem Anschlusselement in Form eines Anschlussflansches 10 sowie mit einer Vielzahl von Stabilisierungsringen 15.

Wie in Fig.3A ersichtlich ist hier beispielhaft der Rohrabschnitt R der erfindungsgemässen Vorrichtung 2 zum Entkoppeln sowie zur Schwingungskontrolle einstückig ausgebildet, wobei die Faltenbalganordnung F einstückig in den Rohrabschnitt R der Vorrichtung 2 integriert ist.

Im Weiteren ist in Fig.3A ersichtlich, dass der Rohrabschnitt R der Vorrichtung 2 einstückig jeweils an den Enden einen ersten beziehungsweise zweiten Dichtring 12; 13 ausbildet, wobei vorzugsweise die Dichtringe 12; 13 mit einer Riffelung Ri versehen sind.

Wie in Fig.3A ersichtlich ist der Rohrabschnitt R gebogen und zwei Schenkel S aufgespannt werden mit einem dazwischen aufgespannten Winkel α zwischen 75° bis 120°, noch bevorzugter einen Winkel von etwa 90°, und dadurch zwei winklig zueinander stehende Schenkel S ausgebildet sind, an welchen die Faltenbalganordnung F angeordnet ist. Besonders bevorzugt ist ein zwischen den beiden Schenkeln S aufgespannter Winkel α im Wesentlichen rechtwinklig ausgestaltet.

Es hat sich vorteilhaft gezeigt, dass das Anbringen zusätzlicher Stabilisierungsringe 15 in einem Bereich zwischen den Faltenbalganordnungen F besonders geeignet ist für Anwendungen höherer Druckstufen. Wie in Fig.3A gezeigt sind hier beispielhaft fünf Stabilisierungsringe 15 angeordnet. Zusätzlich oder alternativ dazu kann der Rohrabschnitt R auch mit einer Karkasse verstärkt sein.

Entscheidend ist, dass die Materialstärke im Rohrabschnitt R zwischen den Anschlusselementen gleichbleibend ist, ausser allenfalls im Bereich der Stabilisierungsringe 15 oder Verstärkungsrippen, wo Ausbuchtungen auftreten können. Bereiche von geringerer Materialstärke würden unweigerlich zu Durchbrüchen führen, da die Drücke im genannten Anwendungsbereich sehr hoch sind. Die beste Form- und Druckstabilität bei minimalem Materialeinsatz kann mit einer gleichmässigen Materialstärke erreicht werden. Zusätzliche Stützrippen oder Stabilisierungsringe können trotzdem angebracht werden.

Wie aus den Figuren hervorgeht, bestehen die Faltenbalganordnungen F aus einem oder mehreren ringförmig geschlossenen, jeweils 360° umlaufenden Faltungen 16. Die einzelnen Faltungen 16 der Faltenbalganordnungen F sind derart ausgestaltet, dass in einem Längsschnitt, wie dargestellt in Fig. 3a, die Mittellinie innerhalb des Materials etwa Kugelsegmente mit selben Radien nachbilden. In der Regel sind es etwa Halbkugelsegmente, die aneinandergereiht sind, wobei an den Enden Viertelkugelsegmente angefügt sind. Die Radien sind gleichbleibend aber in unterschiedliche Richtungen verlaufend, sodass etwa Sinusformen der Faltungen 16 entstehen. Es gibt keine geraden Abschnitte dazwischen. Die Radien entsprechen etwa der Materialstärke, wobei eine Abweichung von einem Faktor von 1.5 zulässig ist.

**Fig.3B** zeigt eine Detailansicht eines in Fig.3A gezeigten Bereichs B der ersten bevorzugten Ausführungsform der erfindungsgemässen Vorrichtung 2 des als Anschlussflansch ausgestalteten Anschlusselements. Der Abstand vom Ende der Vorrichtung 2, wo auch die Riffelung Ri dargestellt ist, bis zur Faltenbalganordnung F soll möglichst klein gehalten werden. In dieser Darstellung ist dieser Abstand kleiner als eine Faltung. In anderen Anordnungen, wo das Anschlusselement mehr Platz beansprucht, kann dieser Abstand bis zwei Faltungen breit sein. Dieser Abstand ist möglichst gering zu halten, damit der Rohrabschnitt R zwischen den Faltenbalganordnungen F maximal wird. Es hat sich erwiesen, dass dadurch die Schallübertragung reduziert werden kann.

**Fig.3C** zeigt eine Frontansicht der ersten bevorzugten Ausführungsform der erfindungsgemässen Vorrichtung mit einem Anschlusselement in Form von Anschlussflanschen 12; 13.

**Fig.4A** zeigt einen Längsschnitt A-A durch die erste bevorzugte Ausführungsform der erfindungsgemässen Vorrichtung 2 zum Entkoppeln sowie zur Schwingungskontrolle mit einem Anschlusselement in Form eines Anschlussflansches 10. Auch hier ist der Abstand vom Ende des Rohrabschnittes R bis zur ersten Faltung kleiner als die Breite einer Faltung.

Alternativ zu den in Fig.4A gezeigten Anschlussflanschen zeigt **Fig.4B** eine Detailansicht des Anschlusselements in Form einer Verschraubung 21 der zweiten bevorzugten, in Fig.2 gezeigten Ausführungsform der erfindungsgemässen Vorrichtung 2 zum Entkoppeln sowie zur Schwingungskontrolle. Die Verschraubung 21 ist hier dreiteilig und umfasst hierbei ein ringförmiges Anschlussstützelement 24, welches beispielsweise stoffschlüssig an der Aussenwand des Rohrabschnitts R befestigt sein kann, beispielsweise durch Verkleben oder Verschweissen. Das Anschlussstützelement 24 zeigt hier ein Aussengewinde. Eine Überwurfmutter 23 weist hier ein mit dem Aussengewinde des Anschlussstützelement 24 korrespondierendes Innengewinde auf und umschliesst eine vorstehende Nase N einer mehrkantigen Verbindungsmutter 28 zur Herstellung einer Verbindung zwischen dem Rohrabschnitt R der erfindungsgemässen Vorrichtung 2 und der mit einem Innengewinde versehenen Verbindungsmutter 28.

**Fig.4C** zeigt eine Detailansicht des Anschlusselements in Form eines Presssystems beziehungsweise eines Pressanschlusses 25 einer dritten bevorzugten Ausführungsform der erfindungsgemässen Vorrichtung 2.

Das Presssystem beziehungsweise der Pressanschluss 25 umfasst ein Anschlussstützelement 24', eine mit einem Innengewinde versehene Überwurfmutter 23' sowie einen Dichtring 12". Am Ende des Rohrabschnitts R der Vorrichtung 2 ist hier einstückig jeweils am Ende ein Dichtring 12" ausgebildet.

Das Anschlussstützelement 24' kann beispielsweise stoffschlüssig an der Aussenwand des Rohrabschnitts R befestigt sein kann, beispielsweise durch Verkleben oder Verschweissen.

Mittels der Überwurfmutter 23' wird hier eine Pressverbindung zwischen dem Anschlussstützelement 24' sowie einem zweiten Rohranschluss 29, indem ein Innengewinde der Überwurfmutter 23' mit einem Aussengewinde des Anschlussstützelements 24' zusammenwirkt. Im Weiteren umschliesst hier die Überwurfmutter 23' eine Nase N' des Rohranschlusses 29 zur Herstellung einer fluiddichten Verbindung zwischen Rohrabschnitt R der erfindungsgemässen Vorrichtung 2 und dem Rohranschluss 29.

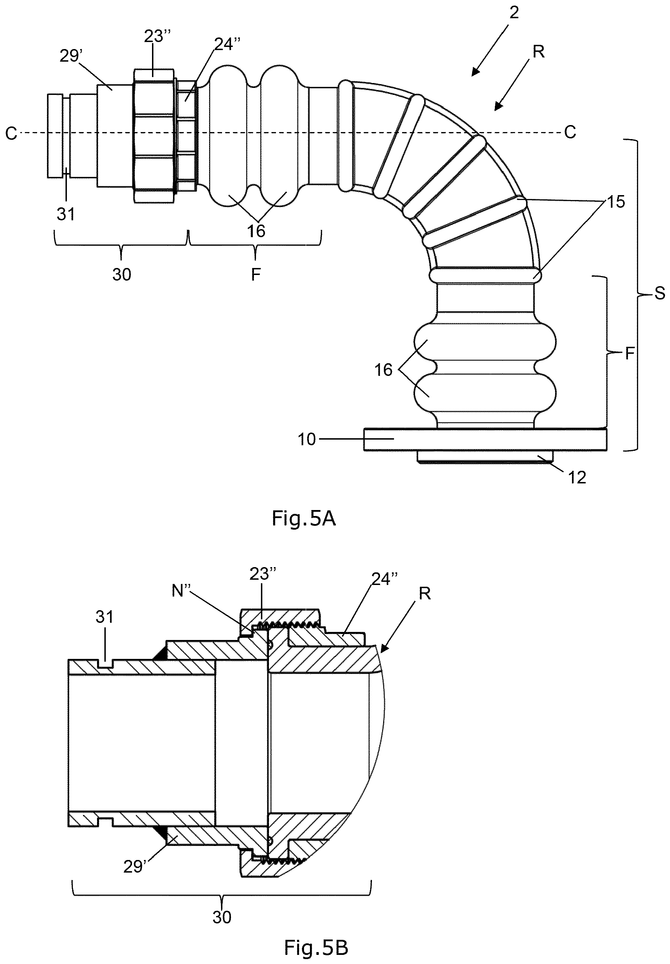

**Fig.5A** zeigt eine vierte bevorzugte Ausführungsform der erfindungsgemässen Vorrichtung 2 zum Entkoppeln sowie zur Schwingungskontrolle mit einem Anschlusselement in Form einer Nutverbindung 30.

**Fig.5B** zeigt einen Schnitt C-C durch die vierte bevorzugte Ausführungsform der erfindungsgemässe Vorrichtung 2 mit einem Anschlusselement in Form einer Nutverbindung, wobei vorzugsweise mit einer Rohrkupplung eine Verbindung mit einem hier nicht gezeigten Verbindungsrohr hergestellt werden kann.

Ein Anschlussstützelement 24" ist hier beispielhaft stoffschlüssig an der Aussenwand des Rohrabschnitts R befestigt sein kann, beispielsweise durch Verkleben oder Verschweissen und ist mit einem Aussengewinde versehen. Dabei ist hier einstückig mit dem Rohrabschnitt R am Ende ein Dichtring 12" ausgebildet. In dieser Anordnung ist der Abstand vom Ende des Rohrabschnittes R bis zur ersten Faltung etwas grösser als die Breite einer Faltung.

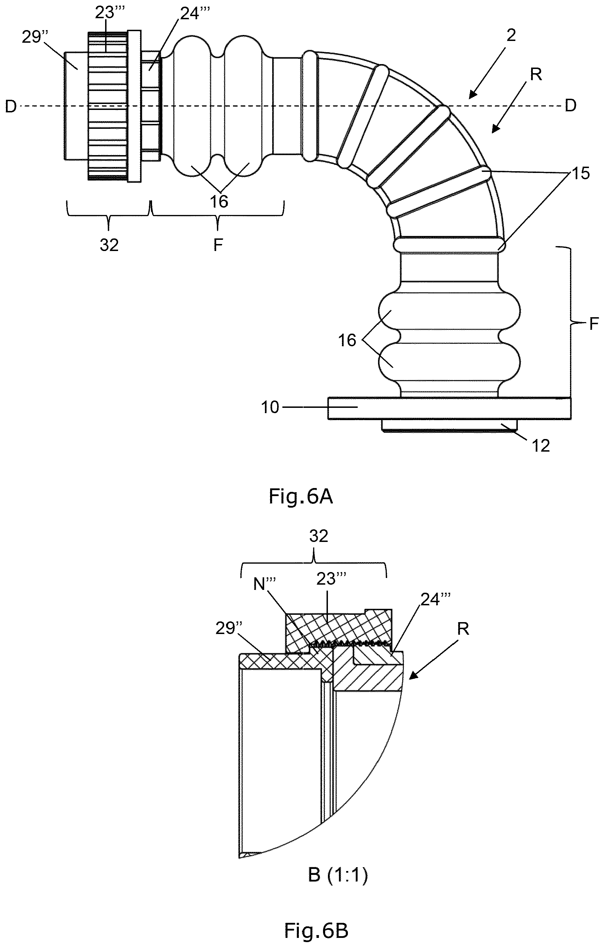

**Fig.6A** zeigt eine fünfte bevorzugte Ausführungsform der erfindungsgemässen Vorrichtung zum Entkoppeln sowie zur Schwingungskontrolle mit einem Anschlusselement in Form einer dritten Schraubanschlusses 32.

**Fig.6B** zeigt einen Schnitt D-D durch die weitere Verschraubung 29 der fünften bevorzugten Ausführungsform der erfindungsgemässen Vorrichtung 2. Der hier gezeigte dritte Schraubanschluss 32 umfasst eine Überwurfmutter 23‴ sowie ein mit dem Rohrabschnitt R stoffschlüssig verbundenes Anschlussstützelement 24‴ auf.

Überwurfmutter 23‴ weist hier ein mit dem Aussengewinde des Anschlussstützelements 24‴ korrespondierendes Innengewinde auf und umschliesst eine vorstehende Nase N‴ eines zweiten Rohranschlusses 29" zur Herstellung einer Verbindung zwischen dem Rohrabschnitt R der erfindungsgemässen Vorrichtung 2 und mit dem zweiten Rohranschluss 29".

Vorzugsweise sind die Überwurfmutter 23‴ sowie der zweite Rohranschluss 29" des dritten Schraubanschlusses 32 aus einem nicht-metallischen Material, d.h. insbesondere aus einem Kunststoff wie Polyethylen (PE) oder Polyvinylchlorid (PVC), gefertigt ist, wobei Kunststoff vorteilhaft ist für Anwendungen im Lebensmittel- und Chemiebereich.

Im Sinne der vorliegenden Erfindung sind beliebige Kombinationen der in den Fig.1 bis Fig.6B an den beiden Enden des Rohrabschnitts R denkbar. In dieser Anordnung entspricht der Abstand vom Ende des Rohrabschnittes R bis zur ersten Faltung 16 etwa der Breite einer Faltung.

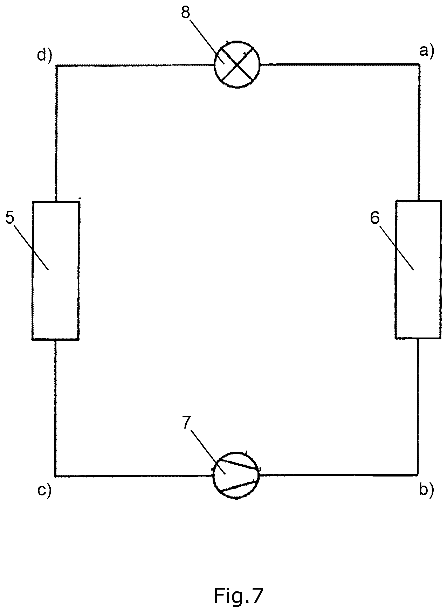

**Fig.7** zeigt ein HLKK-Verdichtersystem, auf welchem auch eine Wärmepumpeneinrichtung basiert, welche die erfindungsgemässe Vorrichtung 2 umfassen kann. Das HLKK-Verdichtersystem / Wärmepumpeneinrichtung 1 umfasst einen Verdichter 7, einen Kondensator (Verflüssiger) 6, eine Expansionseinrichtung, beispielsweise ein Expansionsventil 8, sowie einen Verdampfer 5. Der Verdichter 7, der Kondensator 6, die Expansionseinrichtung sowie der Verdampfer 5 sind in den Abschnitten a) bis d) fluidisch verbunden zum Übertragen eines Wärmeübertragungsfluids. Im Falle von Luft als gasförmiges Wärmeübertragungsfluid handelt es sich typischerweise um eine Klimaanlage oder eine Wärmepumpeneinrichtung. Die erfindungsgemässe Vorrichtung 2 kann hierbei vorzugsweise in einem Abschnitt b) zwischen Verdichter 7 und Kondensator 6 angeordnet sein.

### Bezugszeichenliste

- 1: HLKK-Verdichtersystem / Wärmepumpeneinrichtung
- 2: Vorrichtung zum Entkoppeln sowie zur Schwingungskontrolle
- 5: Verdampfer
- 6: Kondensator (d.h. Verflüssiger)
- 7: Verdichter
- 8: Expansionsventil
- 10: Erster Anschlussflansch
- 11: Zweiter Anschlussflansch
- 12: Erster Dichtring (des Anschlussflansches)
- 13: Zweiter Dichtring (des Anschlussflansches)
- 15: Stabilisierungsring
- 16: Faltung (der Faltenbalganordnung)
- 21: Erster Schraubanschluss
- 22: Zweiter Schraubanschluss
- 23;23';24";24‴: Überwurfmutter
- 24;24';24": Anschlussstützelement
- 25: Pressanschluss
- 28: Verbindungsmutter
- 29;29';29": Zweiter Rohranschluss
- 30: Nutverbindung
- 31: Nut
- 32: Dritter Schraubanschluss
- a,b,c,d: Abschnitte (zwischen den Komponenten Wärmepumpe)
- F: Faltenbalganordnung
- N;N': Nase
- R: Rohrabschnitt
- Ri: Riffelung
- S: Schenkel
- α: Winkel (zwischen den Schenkeln)

## Patentansprüche

1. Vorrichtung (2) in Form eines Verbindungsrohres zur Verwendung in Wärmepumpeneinrichtungen zum Entkoppeln sowie zur Schwingungskontrolle, umfassend:
- einen Rohrabschnitt (R); sowie
- jeweils ein endseitig angeordnetes Anschlusselement;
wobei die Vorrichtung (2) genau zwei nicht-metallische, beabstandete, versetzt angeordnete Faltenbalganordnungen (F) zur Schwingungskompensation umfasst;
wobei der Rohrabschnitt (R) zwischen den Anschlusselementen, abgesehen von allfälligen einzelnen Stabilisierungsringen (15) oder Verstärkungsrippen, eine gleichbleibende Materialstärke aufweist, und wobei
die Faltenbalganordnungen (F) aus einem oder mehreren ringförmig geschlossenen, jeweils 360° umlaufenden Faltungen (16) bestehen, und dass die Faltungen (16) der Faltenbalganordnungen (F) derart ausgestaltet sind, dass in einem Längsschnitt die Mittellinie innerhalb des Materials etwa Kugelsegmente mit selben Radien nachbilden.

2. Vorrichtung (2) nach Patentanspruch 1,
**dadurch gekennzeichnet, dass**
der Rohrabschnitt (R) gebogen ist und zwei Schenkel (S) aufgespannt werden mit einem dazwischen aufgespannten Winkel (α) zwischen 75° bis 120°, noch bevorzugter einen Winkel von etwa 90°, und dadurch zwei winklig zueinander stehende Schenkel (S) ausgebildet sind, an welchen die Faltenbalganordnung (F) angeordnet ist.

3. Vorrichtung (2) nach Patentanspruch 1 oder 2,
**dadurch gekennzeichnet, dass**
die Faltenbalganordnung (F) jeweils direkt anliegend an ein Anschlusselement angeordnet ist, sodass der Abstand vom Ende der Vorrichtung (2) bis zur Faltenbalganordnung (F) kleiner ist als zwei Faltungen.

4. Vorrichtung (2) nach einem der vorherigen Patentansprüche,
**dadurch gekennzeichnet, dass**
Rohrabschnitt (R) der Vorrichtung (2) zum Entkoppeln sowie zur Schwingungskontrolle einstückig ausgebildet ist und dadurch die Faltenbalganordung (F) einstückig in den Rohrabschnitt (R) der Vorrichtung (2) integriert ist.

5. Vorrichtung (2) nach einem der vorherigen Patentansprüche,
**dadurch gekennzeichnet, dass**
die Faltenbalganordnung (F) zwischen eins bis drei Faltungen, besonders bevorzugt zwei Faltungen, umfasst.

6. Vorrichtung (2) nach einem der vorherigen Patentansprüche,
**dadurch gekennzeichnet, dass**
die Vorrichtung (2) zum Entkoppeln sowie zur Schwingungskontrolle zusätzlich eine Vielzahl, vorzugsweise fünf bis neun Stabilisierungsringe (15), umfasst, wobei die Stabilisierungsringe (15) in einem Bereich zwischen den Faltenbalganordnungen (F) angebracht sind.

7. Vorrichtung (2) nach einem der vorherigen Patentansprüche,
**dadurch gekennzeichnet, dass**
das Anschlusselement in Form einer Flanschverbindung, eines Presssystems, einer Schraubverbindung oder einer Nutverbindung ausgebildet ist.

8. Vorrichtung (2) nach Anspruch 1, **dadurch gekennzeichnet, dass** der Radius die Grössenordnung der Materialstärke des Rohrabschnittes aufweist.

9. Vorrichtung (2) nach einem der vorherigen Patentansprüche,
**dadurch gekennzeichnet, dass** der Rohrabschnitt volumenmässig vorwiegend aus einem Elastomer besteht.

10. Vorrichtung (2) nach einem der vorherigen Patentansprüche,
**dadurch gekennzeichnet, dass** sie mit einer Karkasse verstärkt ist.

11. Verwendung einer Vorrichtung (2) nach einem der vorherigen Patentansprüche in einer Wärmepumpeneinrichtung als fluidische Verbindung sowie zur Entkopplung und Schwingungskontrolle gegenüber einem Schwingungserzeuger, beispielsweise gegenüber einer Pumpe oder gegenüber einem Verdichter.

## Claims

1. Device (2) in the form of a connecting pipe for use in heat pump devices for decoupling and for vibration control, comprising:
- a pipe section (R); and
- respectively an end-side arranged connecting element; wherein the device (2) comprises exactly two non-metallic, spaced, offset bellows arrangements (F) for vibration compensation; wherein the pipe section (R) between the connecting elements, apart from any individual stabilising rings (15) or reinforcing ribs, has a constant material thickness, and wherein the bellows arrangements (F) consist of one or more annularly closed foldings (16), each running around 360°, and that the foldings (16) of the bellows arrangements (F) are designed in such a way that in a longitudinal section the centre line within the material forms approximately spherical segments with the same radii.

2. Device (2) according to claim 1,
**characterised in that**
the pipe section (R) is bent and two legs (S) are spanned with an angle (α) between them of between 75° and 120°, more preferably an angle of about 90°, and thus two legs (S) at an angle to each other are formed, on which the bellows arrangement (F) is arranged.

3. Device (2) according to claim 1 or 2,
**characterised in that**
the bellows arrangement (F) respectively is arranged directly adjacent to a connecting element so that the distance from the end of the device (2) to the bellows arrangement (F) is less than two foldings.

4. Device (2) according to one of the preceding claims,
**characterised in that**
pipe section (R) of the device (2) for decoupling and for vibration control is formed in one piece and the bellows arrangement (F) is thereby integrated in one piece into the pipe section (R) of the device (2).

5. Device (2) according to one of the preceding claims,
**characterised in that**
the bellows arrangement (F) comprises between one and three foldings, particularly preferably two foldings.

6. Device (2) according to one of the preceding claims,
**characterised in that**
the device (2) for decoupling and for vibration control additionally comprises a plurality, preferably five to nine stabilising rings (15), wherein the stabilising rings (15) are arranged in an area between the bellows arrangements (F).

7. Device (2) according to one of the preceding claims,
**characterised in that**
the conneecting element is designed in the form of a flange connection, a press system, a screw connection or a groove connection.

8. Device (2) according to claim 1, **characterised in that** the radius is of the order of magnitude of the material thickness of the pipe section.

9. Device (2) according to one of the preceding claims,
**characterised in that** the pipe section consists predominantly of an elastomer in terms of volume.

10. Device (2) according to one of the preceding claims, **characterised in that** it is reinforced with a carcass.

11. Use of a device (2) according to one of the preceding claims in a heat pump device as a fluidic connection and for decoupling and vibration control with respect to a vibration generator, for example with respect to a pump or with respect to a compressor.

## Revendications

1. Dispositif (2), présentant la forme d'un tube d'assemblage, destiné à être utilisé dans des dispositifs de pompe à chaleur pour le découplage, ainsi que pour le contrôle des vibrations, comprenant :
- un tronçon tubulaire (R) ; ainsi
- que chaque fois un élément de raccordement, placé du côté extrémité ;
le dispositif (2) comprenant exactement deux ensembles non métalliques formant soufflet (F), écartés, placés avec un décalage, destiné à compenser les vibrations ;
le tronçon tubulaire (R) comprenant entre les éléments de raccordement, outre d'éventuelles bagues stabilisatrices (15) ou nervures de renfort individuelles une épaisseur de matière constante, et les ensembles formant soufflet (F) étant constitués d'une ou de plusieurs convolutions (16) fermées de forme annulaire, chacune périphérique à 360 ° et les convolutions (16) des ensembles formant soufflet (F) étant conçues de telle sorte que dans une coupe longitudinale, la ligne médiane à l'intérieur de la matière reproduise approximativement des segments sphériques de rayons identiques.

2. Dispositif (2) selon la revendication 1 du brevet,
**caractérisé en ce que** le tronçon tubulaire (R) est recourbé et que deux branches (S) sont définies, avec un angle (α) défini entre elles compris entre 75° et 120°, de manière encore plus préférentielle, un angle d'environ 90°, et que de ce fait, deux branches (S) soient conçues qui forment un angle entre elles, sur lequel est placé l'ensemble formant soufflet (F).

3. Dispositif (2) selon la revendication 1 ou 2, **caractérisé en ce que** l'ensemble formant soufflet (F) est chaque fois placé en étant directement adjacent à un élément de raccordement, de telle sorte que l'écart à partir de l'extrémité du dispositif (2) jusqu'à l'ensemble formant soufflet (F) soit inférieur à deux convolutions.

4. Dispositif (2) selon l'une quelconque des revendications précédentes du brevet, **caractérisé en ce que** le tronçon tubulaire (R) du dispositif (2) destiné au découplage ainsi qu'au contrôle des vibrations est conçu en monobloc et que de ce fait, l'ensemble formant soufflet (F) est intégré en monobloc dans le tronçon tubulaire (R) du dispositif (2).

5. Dispositif (2) selon l'une quelconque des revendications précédentes du brevet, **caractérisé en ce que** l'ensemble formant soufflet (F) comprend de une à trois convolutions, de manière particulièrement préférentielle, deux convolutions.

6. Dispositif (2) selon l'une quelconque des revendications précédentes du brevet, **caractérisé en ce que** le dispositif (2) destiné au découplage ainsi qu'au contrôle des vibrations comprend additionnellement une pluralité, de préférence de cinq à neuf bagues stabilisatrices (15), les bagues stabilisatrices (15) étant montées dans une zone située entre les ensembles formant soufflet (F).

7. Dispositif (2) selon l'une quelconque des revendications précédentes du brevet, **caractérisé en ce que** l'élément de raccordement est conçu sous la forme d'un assemblage par brides, d'un système de pressage, d'un assemblage par vissage ou d'un assemblage par rainure.

8. Dispositif (2) selon la revendication 1, **caractérisé en ce que** le rayon est de l'ordre de grandeur de l'épaisseur de matière du tronçon tubulaire.

9. Dispositif (2) selon l'une quelconque des revendications précédentes du brevet, **caractérisé en ce qu'**en termes de volume, le tronçon tubulaire est constitué majoritairement en un élastomère.

10. Dispositif (2) selon l'une quelconque des revendications précédentes du brevet, **caractérisé en ce qu'**il est renforcé par une carcasse.

11. Utilisation d'un dispositif (2) selon l'une quelconque des revendications précédentes du brevet dans un dispositif de pompe à chaleur, en tant que liaison fluidique, ainsi que pour le découplage et le contrôle des vibrations par rapport à un générateur de vibrations, par exemple par rapport à une pompe ou par rapport à un compresseur.
